# EUROPEAN PATENT SPECIFICATION

(11) **EP 2 880 103 B1**
(45) Date of publication and mention of the grant of the patent: **04.12.2019**
(21) Application number: 13825420.6
(22) Date of filing: 17.06.2013
(51) Int. Cl.: C09D 5/00, C09K 13/06, C23C 28/02, H01B 1/02, C09C 1/62, C09C 3/06, C09D 5/08, C09C 1/64, C08K 9/02, C23C 22/34, C09D 7/40, C09D 7/62

(54) **OXIDE COATED METAL PIGMENTS AND FILM-FORMING COMPOSITIONS**
OXIDBESCHICHTETE METALLPIGMENTE UND FILMBILDENDE ZUSAMMENSETZUNGEN
PIGMENTS DE MÉTAL ENDUITS D'OXYDE ET COMPOSITIONS FILMOGÈNES

(30) Priority: 01.08.2012 US 201213564341
(43) Date of publication of application: 10.06.2015
(73) Proprietor: The United States Of America As Represented By The Secretary of the Navy, Patuxent River, MD 20670 (US)
(72) Inventor: MATZDORF, Craig, A., Hollywood, Maryland 20636 (US); NICKERSON, William, Springfield, VA 22153 (US)
(74) Representative: Elsworth, Dominic Stephen
(86) International application number: PCT/US2013/046094
(87) International publication number: WO 2014/022004

(56) References cited:
- WO-A2-2006/088518
- WO-A2-2006/088519
- US-A- 4 606 967
- US-A1- 2007 096 060
- US-A1- 2009 020 185
- US-A1- 2010 180 793
- US-A1- 2010 310 806
- US-A1- 2011 070 429
- US-A1- 2011 129 609
- US-A1- 2011 159 175
- US-A1- 2012 187 350
- US-A1- 2013 168 612
- US-B1- 6 224 657

## Description

### FIELD OF THE INVENTION

This invention relates to sacrificial metal pigments coated with an effective amount of a corrosion inhibitor and combinations of said coated metal pigments with an organic lubricant grease composition for application to metal substrates. The combination of the coated pigments and the organic lubricant grease composition results in an electrochemically active composition which provides cathodic protection to various metal substrates.

Various surfaces and particularly metal surfaces require the protection of coatings especially when the surfaces are exposed to corrosive environments. Metal surfaces of aircraft, for example, are exposed to seawater which requires protection from corrosion. Specifically, aircraft, e.g., Navy aircraft, are exposed to seawater spray in addition to various acid-forming gases such as sulfur dioxide and the like. In addition to aircraft, various machinery and equipment in the industrial environments, where fossil fuels are used, also needs protection against corrosion. It is important therefore that the coating be resistant to corrosion, various chemicals, the weather and at the same time be flexible and have good adhesion to the metal substrate.

US2012/0187350 describes aluminium alloy powder pigments coated with a semi-conducting corrosion inhibiting oxide in combination with film forming binders.

### BACKGROUND

Metallic pigments are known to provide electrochemical, electrical, thermal, and other properties to compositions which are used for protecting various materials such as metal from corrosion, maintaining electrical conductivity, shielding equipment from electromagnetic fields, resisting elevated temperatures, and providing protection from moisture. Silver, gold and other noble metal pigments are used for their electrical conductivity and thermal conductivity properties. Zinc and magnesium are used for their electrochemical properties. Aluminum is used for its thermal and chemical barrier properties. A major shortcoming of the noble metals is their strong cathodic potential. When used in products for electrical and thermal management, the noble metals coupled with anodic materials like aluminum alloys are used for electrical equipment.

Metals such as zinc and magnesium are used in cured coatings to provide corrosion resistance to the metal on which they are coated. Typical zinc-rich primers use zinc "dust" which is approximately 5 micron zinc powder. This zinc powder is added untreated to various resins, organic and inorganic. Zinc-rich coatings are used mostly on steel to slow down the onset of rust or corrosion. A common secondary problem with zinc-rich coatings is the rusting or corrosion of the zinc powder in the coating while it is protecting the steel. When zinc corrodes, it typically forms a white residue which can discolor the object being protected and is not desired for aesthetic reasons. This zinc self-corrosion also "uses up" the zinc and reduces the effective life of the zinc-rich coating.

Magnesium has been used in combination with zinc and by itself in similar coatings to protect steel and aluminum respectively. Magnesium is also prone to forming white corrosion products which discolor the object being protected and is undesirable for aesthetic reasons. A second application of coatings with metal pigments is for electrical and thermal conductivity. Silver, nickel, copper and aluminum are good conductors of electricity and heat. Silver and nickel are commonly used as pigments in conductive coatings on other materials like glass, carbon/graphite, and aluminum which are lighter and less expensive. Copper is an excellent bulk conductor but is not typically used as a conductive pigment as it oxidizes quickly and loses its ability to conduct electricity effectively in coatings. Aluminum is an excellent bulk conductor, but it also oxidizes easily in the natural environment and is not effective as a conductive pigment in coatings. A third application is the protection of iron and iron alloy (steel) particles from rusting due to exposure to the environment. These particles are used in coatings for their magnetic properties and tend to red rust and lose effectiveness over time due to exposure to the environment.

This invention relates to a composition and to a process for preparing and applying a semi-conducting coating comprising at least one metal oxide onto metal particles and the use of these coated particles in coatings designed to protect substrates from corroding and provide electrical or thermal conductivity.

More specifically, this invention relates to compositions of these coated particles in greases which are used to protect substrates from corroding (zinc or magnesium) and to provide an electrically and thermally conductive path on surfaces which have insufficient conductivity (silver, nickel, aluminum, copper) or for magnetic properties (iron). The conductive coatings are typically used for electromagnetic shielding, static dissipation, continuity, and thermally conductive pathways in the case of flexible circuits and similar applications. These metals are typically used at high purity for maximum conductivity or coating efficiency. This invention covers all of these potential alloys as long as the key property of cathodic protection (magnesium and zinc) or electrical conductivity (silver, nickel, copper and aluminum) are maintained. For example, zinc can be alloyed with nickel to yield a particle with tailored open circuit potential and controlled activity. This alloy can be coated effectively with the semi-conducting coating described by this invention to control the corrosion or white rusting of the zinc in the alloy.

It is therefore an object of this invention to incorporate electrochemically active coated-pigments into a grease to provide cathodic protection to metal substrates.

It is another object to provide cathodic protection to metal substrates by coating the substrate with a sacrificial anode coating that keeps the electrochemical potential of the substrates negative to prevent its corrosion. It is a further object of this invention to provide metal pigments containing effective amounts of a corrosion-resistant oxide coating and the use of these coated pigments in a grease as a coating for metal substrates.

### DESCRIPTION OF DRAWINGS

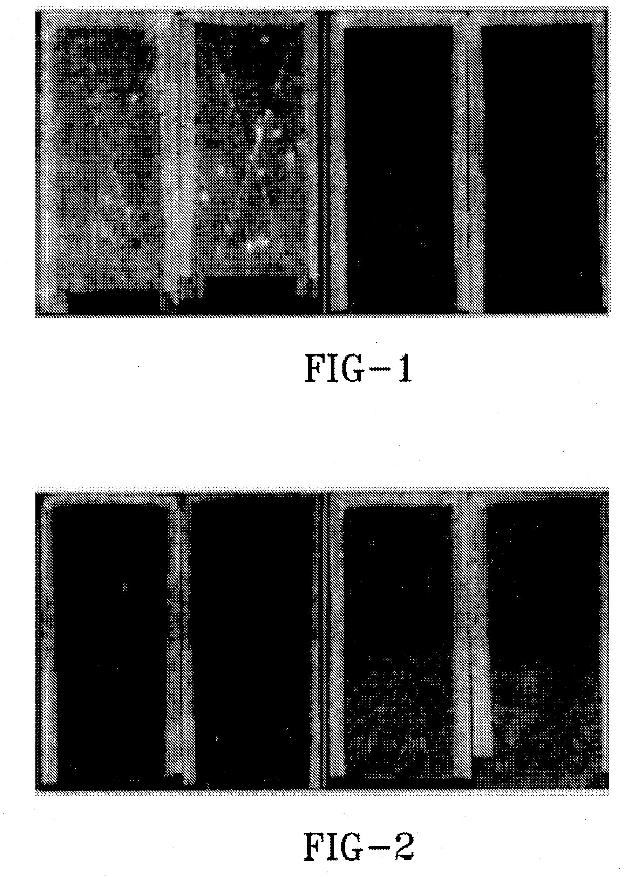

Figure 1 shows the performance of two coatings which do not form part of the present invention on 7075-T6, an aluminum substrate, after exposure to the ASTM B117 salt fog for 500 hours. The coated particles are more resistant to self-corrosion which leads to white zinc oxide that is visible on the coating with the untreated zinc. Compare the coatings on 7075-T6 aluminum with untreated zinc particles in epoxy (left) and with treated zinc particles (right) after 500 hours exposure to ASTM B117, as shown in Example 10.

A composition identical to Example 10, except that the particles were 20 micron aluminum particles treated per Example 1 and the untreated substrate. Figure 2 shows the performance of the two coatings which do not form part of the present invention on 7075-T6 aluminum after exposure to the ASTM B117 salt fog for 500 hours. It is clear that the coated particles are more resistant to self-corrosion which leads to white aluminum oxide that is visible on the coating containing the untreated aluminum particles. Compare the coatings on 7075-T6 aluminum with untreated aluminum particles in an epoxy resin (left) and with the treated aluminum particles (right) after 500 hours exposure to ASTM B117.

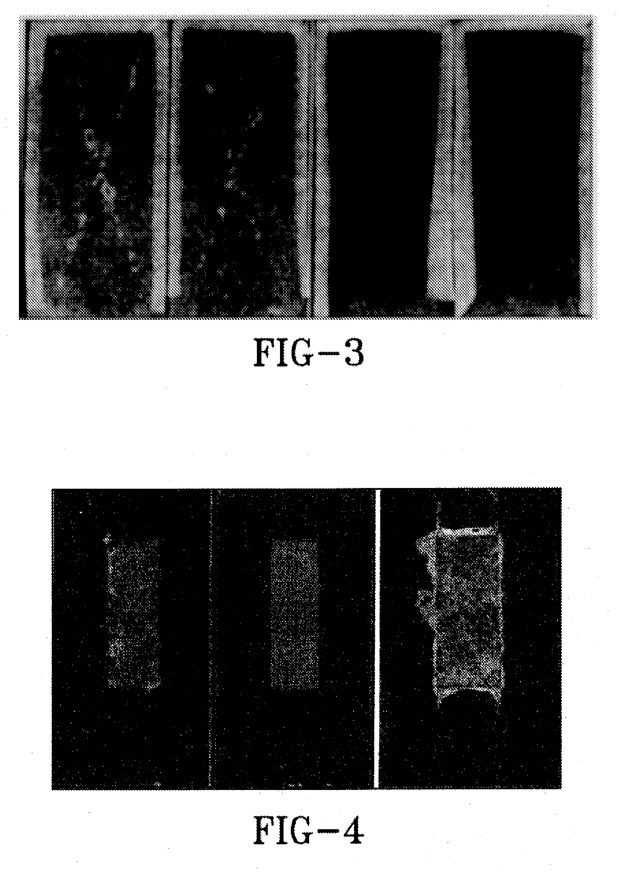

Composition of corrosion-resistant epoxy primer made with coated zinc and magnesium particles. An identical composition to Example 10, except that the particles were a mixture of 75% 5 micron zinc particles and 25% 100 micron magnesium particles treated and untreated. Figure 3 shows the performance of the two coatings which do not form part of the present invention on 2024-T3 aluminum after exposure to the ASTM B117 salt fog for 500 hours. The coated particles are more resistant to self-corrosion which leads to white zinc and magnesium oxide that is visible on the coating with untreated particles. Coatings on 2024-T3 aluminum with untreated zinc and untreated magnesium particles in an epoxy resin (left) and with coated zinc and magnesium particles (right) after 500 hours exposure to ASTM B117.

Figure 4 shows the performance of conductive grease made with coated nickel particles. Greases made per Example 9 with uncoated and coated nickel particles were applied to 2024-T3 aluminum panels and assessed for electrical performance and corrosivity of the grease to the aluminum substrate. The uncoated nickel grease gave a dc resistance of 0.8 milliohms when applied between two aluminum panels torqued to 2.26NM. The coated grease gave a dc resistance of 1.89 milliohms in similar test. This compares to 3.3 milliohms for a 15 volume percent silver grease reference.

For the applications of interest a 2.5 milliohm resistance or lower must be obtained. This data shows that the coated nickel still meets the electrical requirement. The photos show the corrosivity of the uncoated and coated nickel greases on 2024-T3 aluminum that was exposed to ASTM B117 salt fog for 24 hours. Figure 4 shows the aluminum after the grease was removed after the exposure. The uncoated nickel grease caused significant pitting and corrosion of the aluminum under the grease.

The coated nickel grease only caused minor surface oxidation, with no pitting. This significant reduction in corrosivity of the grease while maintaining required electrical conductivity. The silver reference grease is shown as well. It caused even more damage to the aluminum surface than the uncoated nickel, as expected since silver is more cathodic than the nickel. Figure 4 specifically shows Aluminum 2024-T3 panels after exposure to 24 hours of ASTM B117 salt fog in contact with uncoated nickel grease (left), coated nickel grease (center) and uncoated silver reference grease (right).

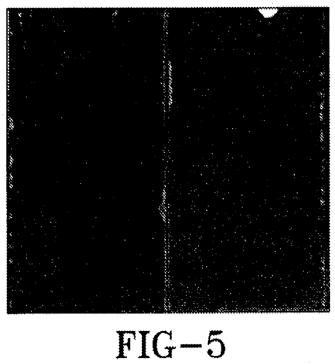

Figure 5 shows the performance of conductive grease made with coated aluminum particles. Greases made per Example 9, except with uncoated or coated aluminum particles per Example 1 were applied to a 2024-T3 aluminum panels and assessed for electrical performance and corrosivity of the grease to the aluminum substrate. Figure 5 shows the corrosivity of the uncoated and coated aluminum greases on 2024-T3 aluminum that was exposed to ASTM B117 salt fog for 24 hours. The figure shows the aluminum after the grease was removed after the exposure. Neither grease caused corrosion of the aluminum substrate. This is not unexpected since the open circuit potentials of the aluminum particles and aluminum substrate are similar, but validates that the coating on the aluminum particles does not change their corrosivity on the aluminum substrate. Figure 5 specifically shows Aluminum 2024-T3 panels after exposure to 24 hours of ASTM B117 salt fog in contact with uncoated aluminum grease (left) and coated aluminum grease (right).

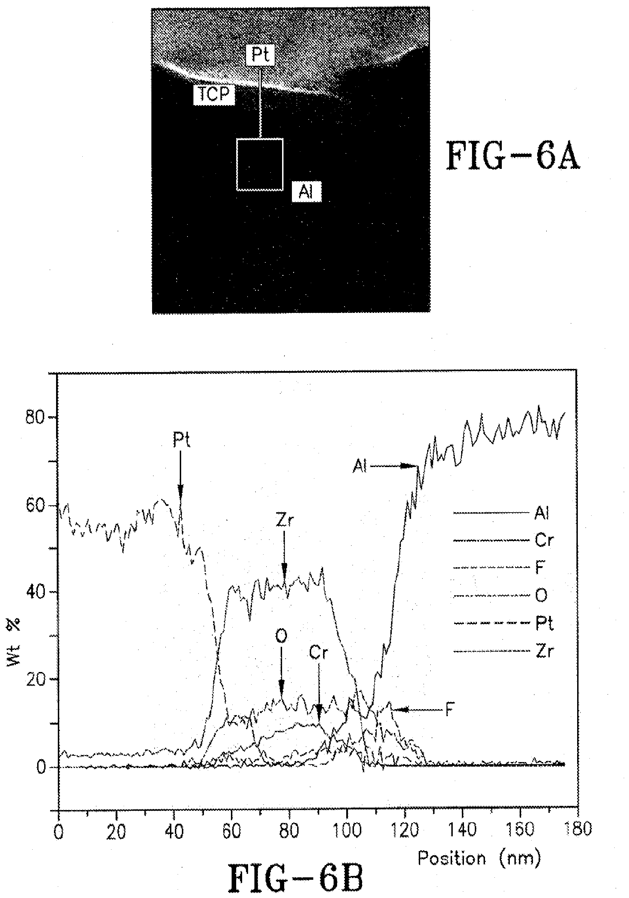

Figure 6 shows the process of example one where (a) is the transmission electron micrograph and (b) shows the mono-EDS line profiles.

### SUMMARY OF THE INVENTION

This invention is directed to coated metal pigments which have a particle size ranging from about 2 to 100 microns. The metal pigments are coated with an effective amount of a metal oxide corrosion-inhibitor. The corrosion-inhibitor is derived from an aqueous solution consisting essentially of trivalent chromium compounds, hexafiuorozirconates, and at least one fluorocarbon selected from the group consisting of tetrafluoroborates, hexafluorosilicates, and hexafluorotitanates.

According to the invention there is provided an electrochemically corrosion-resistant composition as specified in Claim 1.

### DETAILED DESCRIPTION

The invention relates to electrochemically corrosion-resistant compositions as specified in Claim 1 for coating metal substrates including, for example, substrates of aluminum, aluminum alloys, iron and various other ferrous metals such as steel.

The metal oxide coated pigments of the electrochemically corrosion-resistant coating compositions of this invention for application to metal substrates consist essentially of coated sacrificial-metal pigments having a particle size ranging from about 2 to 100 microns coated with effective amounts of at least one metal oxide ; the uncoated metal pigments are selected from the group consisting of zinc, magnesium, iron, aluminum, silver, copper and nickel; said coating consist essentially of metal oxides selected from the group consisting of chromium oxide, zirconium oxide and mixtures of chromium and zirconium oxides derived from an aqueous composition consisting essentially of, in parts by weight, from 0.01 to 22 parts of a trivalent chromate, from 0.01 to 12 parts of hexafluorozirconate, from 0.01 to 12 parts of a fluorocarbon selected from the group consisting of tetrafluoroborate, hexafluorosilicate, and hexafluorotitanates, from about 0.0 to 12 parts of a divalent zinc compound and from 0.0 to 5.0 parts of a water soluble corrosion inhibitor. The water soluble corrosion inhibitors are selected from the group consisting of benzimidazole, benzothiazole, benzoxazole, diphenyltriazole, benzotriazole, and tolytriazole.

Another example of the electrochemically corrosion-resistant compositions for application onto metal substrates consisting essentially of, in parts by weight, from about
5 to 80 parts of an organic lubricant grease composition, from about
0.0 to 10 parts of at least one organic corrosion inhibitor, from about
0.0 to 5.0 parts of at least one surfactant, from about
0.0 to 5.0 parts of organic solvent, and from about
20 to 80 parts of a sacrificial-metal pigment having a particle size ranging from about 2 to 100 microns; said metal pigment coated with effective amounts of at least one metal oxide such as chromium and/or zirconium oxides, derived from a composition consisting essentially of an acidic aqueous solution consisting essentially of from about
0.01 to 22 parts of a trivalent chromium compound, from about
0.01 to 12 parts of hexafluorozirconate, from about
0.01 to 12 parts of at least one fluorocarbon selected from the group consisting of tetrafluoroborates, hexafiuorosilicates, and hexafluorotitanates and from about 0.0 to 5 parts by weight of a water soluble corrosion inhibitor.

The organic corrosion inhibitors added to the coating composition are selected from the group consisting of benzimidazole, benzothiazole, benzoxazole, diphenyltriazole, benzotriazole and tolylazole. Effective amounts of solvent for the coatings, e.g., water or an organic solvent range up to about 50%, e.g., from about 10 - 25% by weight of the wet coating.

Example 1- Composition and process to apply a coating to 99.99% aluminum particles or powder pigments of the electrochemically corrosion-resistant composition of the invention.

To one liter of distilled water, add 3.0 grams of basic chromium sulfate, 4.0 grams of potassium hexafluorozirconate, and 0.12 grams potassium tetrafluoroborate. Stir solution until all chemicals are dissolved in H20. Let stand for seven days before use to allow for the inorganic polymer of chromium sulfate to complex with the fluoride salts and equilibrate. Dilute this solution to 40% by volume with distilled water.

Add approximately 100 grams of spherical 20 micron 99.99% aluminum power particles to a one-liter flask. To the flask, add approximately 500 milliliters of the inorganic polymers solution at ambient conditions and agitate or stir for approximately five minutes. The powder tends to settle quickly in the solution so constant agitation is necessary. After five minutes, decant off the inorganic polymer solution. The wet coated powder was added slowly to a large Buchner funnel with filter paper. As the wet slurry was added, a vacuum was applied. The powder was rinsed approximately three times with distilled water to remove unreacted nonorganic polymer solution. After rinsing, the powder cake and filter paper were removed and placed on a large watch glass and allowed to dry at ambient conditions overnight. In the morning, the coated powder was dry to handle and placed in a glass container and sealed.

Example 2: An identical process as Example 1, except that the metal being coated is 5 micron of 99% zinc particles.

Example 3: Second composition and process to apply a coating to aluminum particles.

An identical process as Example 1, except that 2.0 grams per liter of zinc sulfate was added to the inorganic polymer solution after reacting for seven days and after diluting H20 to 40 volume%.

Example 4: Third composition and process for applying a coating to aluminum particles.

An identical process as Example 1, except that the 20 micron 99.99% pure aluminum particles were milled for 3 days in a horizontal bail mill to create flake-like particles before the coating process.

Example 5: Composition and process to apply a coating to iron particles.

An identical process as Example 1, except that the metal being coated is 10 micron of 99.9% iron particles.

Example 6: Composition and process to apply a coating to nickel particles.

An identical process to Example 1, except that the metal being coated is 10 micron of Ni particle agglomerate. The nickel was activated by an acid wash prior to being treated with the coating solution.

Example 7: Composition and process to apply a coating to silver particles.

An identical process as Example 1, except that the metal being coated is 5 micron of 99% silver particles.

Example 8: Composition and process to apply a coating to phosphated iron particles.

Example 9: Composition of a conductive grease made with coated nickel particles.

Particles coated per Example 6 were blended with a liquid polydimethylsiloxane to join the polymer coating up to the point where the composition had acceptable viscosity and properties to be spreadable onto a metal substrate. Approximately 11% of the coated powder was blended into the polydimethylsiloxane.

Example 10 (which does not form part of the present invention): Composition of corrosion-resistant primer coating was made with coated zinc particles.

Particles coated per Example 2 were used to make a corrosion- resistant primer coating. Coated zinc was added to an epoxy resin with an amine curing agent at approximately 58 volume percent. This coating was spray applied to aluminum alloy test panels of 2024-T3 and 7075-T6 and allowed to cure for 24 hours. After curing, the coatings were scribed to the base metal and placed in ASTM B117 and ASTM G85 Annex 4 accelerated salt fog test cabinets. Panels were held in plastic racks at 15 degrees from the vertical. These coatings were compared to a similar epoxy coating that was prepared using uncoated zinc powder.

A variety of organic solvents are known which can be used for purposes of this invention in preparing organic coatings. The preferred solvents are substantially non-polar or oleophilic solvents. These solvents include aromatic or aliphatic hydrocarbons. Aromatic solvents include benzene, toluene, xylenes, naptha, and fractions from the distillation of petroleum. Aliphatic hydrocarbon solvents include hexane, cyclohexane, heptanes, octanes and similar straight and branched hydrocarbons and mixtures thereof, generally having 4-16 carbon atoms. Included are the aliphatic fractions from distillation of petroleum include ng mineral spirits and various mixtures of these solvents in any ratio.

## Claims

1. An electrochemically corrosion-resistant composition for application onto metal substrates consisting essentially of, in parts by weight, from
5 to 80 parts of an organic lubricant, from
0.0 to 10 parts of at least one organic corrosion inhibitor, from
0.0 to 5.0 parts of at least one surfactant, from
0.0 to 5.0 parts of organic solvent, and from
20 to 80 parts of a coated sacrificial-metal pigment having a particle size ranging from 2 to 100 microns; said metal pigment coated with an effective amount of at least one metal oxide derived from a composition consisting essentially of an acidic aqueous solution of from 0.01 to 22 parts of a trivalent chromium compound, from 0.01 to 12 parts of hexafluorozirconate, from 0.01 to 12 parts of at least one fluorocarbon selected from the group consisting of tetrafluoroborates, hexafluorosilicates, and hexafluorotitanates, from 0.0 to 12 parts of at least one divalent zinc compound, and from 0.0 to 5 parts by weight of a water soluble corrosion inhibitor, and wherein the organic lubricant is a grease composition.

2. The electrochemically corrosion-resistant composition of Claim 1, wherein at least one of the divalent zinc compounds is zinc sulphate.

3. The electrochemically corrosion-resistant composition of Claim 1, wherein the grease composition includes polydimethylsiloxane.

4. The electrochemically corrosion-resistant composition of Claim 1, wherein the metal pigment is coated with a mixture of chromium and zirconium oxides.

5. An electrochemically corrosion-resistant composition according to any of Claims 1 to 4, having a resistance of 2.5 milliohms or lower measured when the electrochemically corrosion-resistant composition is situated between two aluminium panels that are pressed together with a torque of 2.26Nm.

6. The electrochemically corrosion-resistant composition of Claim 5, wherein the coated sacrificial-metal pigment particles are nickel particles.

## Patentansprüche

1. Gegen elektrochemische Korrosion beständige Zusammensetzung zum Aufbringen auf Metallsubstrate, die im Wesentlichen aus von
5 bis 80 Teilen eines organischen Gleitmittels, von
0,0 bis 10 Teilen von mindestens einem organischen Korrosionsschutzmittel, von
0,0 bis 5,0 Teilen von mindestens einem Tensid, von
0,0 bis 5,0 Teilen eines organischen Lösungsmittels und von
20 bis 80 Teilen eines beschichteten Opfermetallpigments mit einer Teilchengröße, die von 2 bis 100 Mikrometer reicht, in Gewichtsteilen bestehen; wobei das Metallpigment mit einer wirksamen Menge von mindestens einem Metalloxid beschichtet ist, das von einer Zusammensetzung abgeleitet ist, die im Wesentlichen aus einer sauren wässrigen Lösung von 0,01 bis 22 Teilen einer dreiwertigen Chromverbindung, von 0,01 bis 12 Teilen Hexafluorzirkonat, von 0,01 bis 12 Teilen von mindestens einem Fluorkohlenwasserstoff, der aus der Gruppe bestehend aus Tetrafluorboraten, Hexafluorsilikaten und Hexafluortitanaten ausgewählt ist, von 0,0 bis 12 Teilen von mindestens einer zweiwertigen Zinkverbindung und von 0,0 bis 5 Gewichtsteilen eines wasserlöslichen Korrosionsschutzmittels besteht, und wobei das organische Gleitmittel eine Schmiermittelzusammensetzung ist.

2. Gegen elektrochemische Korrosion beständige Zusammensetzung nach Anspruch 1, wobei mindestens eine der zweiwertigen Zinkverbindungen Zinksulfat ist.

3. Gegen elektrochemische Korrosion beständige Zusammensetzung nach Anspruch 1, wobei die Schmiermittelzusammensetzung Polydimethylsiloxan enthält.

4. Gegen elektrochemische Korrosion beständige Zusammensetzung nach Anspruch 1, wobei das Metallpigment mit einem Gemisch von Chrom- und Zirkonoxiden beschichtet ist.

5. Gegen elektrochemische Korrosion beständige Zusammensetzung nach einem der Ansprüche 1 bis 4 mit einem elektrischen Widerstand von 2,5 Milliohm oder weniger, gemessen, wenn die gegen elektrochemische Korrosion beständige Zusammensetzung sich zwischen zwei Aluminiumplatten befindet, die mit einem Moment von 2,26 Nm zusammengedrückt werden.

6. Gegen elektrochemische Korrosion beständige Zusammensetzung nach Anspruch 5, wobei die beschichteten Opfermetallpigmentteilchen Nickelteilchen sind.

## Revendications

1. Composition électrochimiquement résistante à la corrosion destinée à être appliquée sur des substrats métalliques, consistant essentiellement, en parties en poids, en
de 5 à 80 parties d'un lubrifiant organique,
de 0,0 à 10 parties de un au moins inhibiteur de corrosion organique,
de 0,0 à 5,0 parties de un au moins tensio-actif,
de 0,0 à 5,0 parties d'un solvant organique et
de 20 à 80 parties d'un pigment métallique à revêtement sacrificiel dont la taille des particules va de 2 à 100 microns ; ledit pigment métallique étant revêtu avec une quantité efficace de un au moins oxyde métallique dérivé d'une composition consistant essentiellement en une solution aqueuse acide contenant de 0,01 à 22 parties d'un composé de chrome trivalent, de 0,01 à 12 parties d'un hexafluorozirconate, de 0,01 à 12 parties de un au moins fluorocarbone sélectionné dans le groupe consistant en des tétrafluoroborates, des hexafluorosilicates et des hexafluorotitanates, de 0,0 à 12 parties de un au moins composé de zinc bivalent et de 0,0 à 5 parties en poids d'un inhibiteur de corrosion soluble dans l'eau, et où le lubrifiant organique est une composition de graisse.

2. Composition électrochimiquement résistante à la corrosion de la revendication 1, où un au moins des composés de zinc bivalent est le sulfate de zinc.

3. Composition électrochimiquement résistante à la corrosion de la revendication 1, où la composition de graisse inclut un polydiméthylsiloxane.

4. Composition électrochimiquement résistante à la corrosion de la revendication 1, où le pigment métallique est revêtu d'un mélange d'oxydes de chrome et de zirconium.

5. Composition électrochimiquement résistante à la corrosion selon l'une quelconque des revendications 1 à 4 dont une résistance, mesurée quand la composition électrochimiquement résistante à la corrosion est placée entre deux panneaux d'aluminium qui sont serrés l'un contre l'autre par l'application d'un couple de 2,26 Nm, est inférieure ou égale à 2,5 milliohms.

6. Composition électrochimiquement résistante à la corrosion de la revendication 5, où les particules du pigment métallique à revêtement sacrificiel sont des particules de nickel.
